(19) Europäisches Patentamt
European Patent Office
Office européen des brevets

(11) **EP 4 435 366 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **23163005.4**

(22) Anmeldetag: **21.03.2023**

(51) Internationale Patentklassifikation (IPC):
**F26B 17/00** *(2006.01)*

(52) Gemeinsame Patentklassifikation (CPC):
**F28C 3/14; B29B 9/16; B29B 13/021; B29B 13/065;** C08G 63/183; C08G 63/785; C08G 63/88

(54) **WÄRMETAUSCHER FÜR EINE FESTSTOFFSCHÜTTUNG**

HEAT EXCHANGER FOR A SOLID BULK MATERIAL

ECHANGEUR DE CHALEUR POUR UN LIT DE MATIÈRE SOLIDE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**25.09.2024 Patentblatt 2024/39**

(73) Patentinhaber: **Polymetrix AG**
**9245 Oberbüren (CH)**

(72) Erfinder:
• **Christel, Andreas**
**9524 Zuzwil (CH)**
• **Kuratli, Rudolf**
**9203 Niederwil (CH)**

(74) Vertreter: **Hepp Wenger Ryffel AG**
**Friedtalweg 5**
**9500 Wil (CH)**

(56) Entgegenhaltungen:
EP-A2- 0 124 294    EP-A2- 1 425 146
DE-C- 481 282    US-B1- 6 405 454

**Beschreibung**

Die vorliegende Erfindung betrifft ein Verfahren und eine Vorrichtung zur thermischen Behandlung einer Feststoffschüttung, beispielsweise von Polykondensaten, insbesondere von Polyestern wie Polyethylenterephthalat (PET). Insbesondere betrifft die Vorliegende Erfindung einen Wärmetauscher nach dem Oberbegriff des Anspruchs 1. Solch ein Wärmetauscher ist aus US 6,405,454 bekannt.

Feststoffschüttungen müssen häufig einer thermischen Behandlung wie Erhitzen, Trocknen oder Kühlen unterzogen werden. Beispielsweise wird bei der hinlänglich bekannten Festphasen-Nachkondensation von Polyethylenterephthalat (PET) neben einer Kristallisation von amorphem zu teilkristallinen PET vor der eigentlichen Stufe der Festphasen-Nachkondensation das teilkristalline PET in einem Vorerhitzer gleichmässig und kontrolliert auf eine Temperatur erwärmt, welche im Bereich der bei der Festphasen-Nachkondensation eingesetzten Temperatur oder knapp darunter liegt. Herkömmliche Wärmetauscher bestehen aus einem schachtartigen Behälter, in den das zu behandelnde Gut so kontinuierlich eingebracht wird, dass es in dem Behälter bis zu einem im wesentlichen konstanten Niveau reicht. Es senkt sich unter dem Einfluss der Schwerkraft gleichmäßig ab und wird dabei von einem Prozessgas durchströmt. Das Prozessgas wird üblicherweise durch dachförmige, quer zur Bewegungsrichtung der Feststoffschüttung angeordnete Einbauten eingeführt und abgeleitet. Auf diese Weise wird die Feststoffschüttung gleichmäßig mit Prozessgas beaufschlagt. Die Druckverluste sind vergleichsweise gering. Die dachförmigen Einbauten bewirken eine gewisse Auflockerung innerhalb der Feststoffschüttung, wodurch das insbesondere bei der Behandlung von Kunststoffgranulaten auftretende Risiko der Bildung von Agglomeraten und Brücken herabgesetzt wird.

In der DE 43 00 913 A1 ist ein entsprechender Wärmetauscher beschrieben, in welchem die Feststoffschüttung im gesamten Behandlungsraum und über die Länge der dachförmigen Einbauten hinweg einer gleichmäßigen Behandlung unterzogen wird. Insbesondere sind Mittel vorgesehen, die den Eintrittswiderstand für das Prozessgas beim Einströmen in den Behandlungsraum unter die Dächer erhöhen, so wird ein Bereich höheren Drucks erzeugt, der das Prozessgas gleichmäßig auf die Eintrittsquerschnitte verteilt. Damit wird erreicht, dass alle für die Zuführung des Prozessgases in den Behandlungsraum vorgesehenen ersten Einbauten im wesentlichen gleiche Gaseintrittsmengen erhalten.

Allerdings ist der Fertigungsaufwand für derartige Wärmetauscher mit spezifischen Einbauten nicht unerheblich.

In der WO 99/18404 A1 wurde ein Wärmetauscher vorgeschlagen, bei welchem in einem an sich üblichen Trockner, mit rundem oder rechteckigem Querschnitt, ein Kanal angeordnet ist, dessen Seitenwände aus Elementen wie Lochblechen angefertigt sind.

Dieser Wärmetauscher ist immer noch nicht optimal. Das Prozessgas muss über die gesamte Höhe des Wärmetauschers durch Gaseinlässe eingeleitet und durch den zentral angeordneten Kanal geführt werden, in welchem sich die Feststoffschüttung befindet. Neben dem damit verbundenen apparativen Aufwand ist auch der erreichte Wärmeaustausch mit der Feststoffschüttung limitiert.

Es war die Aufgabe der vorliegenden Erfindung einen verbesserten Wärmetauscher und ein verbessertes Verfahren zur thermischen Behandlung einer Feststoffschüttung bereitzustellen.

Diese Aufgabe wird durch den Gegenstand der vorliegenden Anmeldung gelöst.

Im Detail betrifft die vorliegende Erfindung einen Wärmetauscher für eine Feststoffschüttung, umfassend

- einen Mantel,
- einen innerhalb des Mantels angeordneten Behandlungsraum, welcher mit einem Produkteinlass im oberen Bereich des Wärmetauschers und mindestens einem Produktauslass im unteren Bereich des Wärmetauschers verbunden ist und die Form eines im Wesentlichen vertikal ausgerichteten Hohlzylinders aufweist, wobei der Hohlzylinder durch eine innere Zylinderwand und durch eine äussere Zylinderwand begrenzt wird,
- einen mit einem Gaseinlass verbundenen inneren zylinderförmigen Gasraum innerhalb der inneren Zylinderwand des Behandlungsraums,
- einen mit einem Gasauslass verbundenen äusseren hohlzylinderförmigen Gasraum zwischen der äusseren Zylinderwand des Behandlungsraums und dem Mantel des Wärmetauschers,
  wobei die innere Zylinderwand und die äussere Zylinderwand gasdurchlässig sind, aber die Partikel der Feststoffschüttung im Wesentlichen nicht durch die Zylinderwände hindurchtreten können,

dadurch gekennzeichnet, dass die innere Zylinderwand eine Höhe aufweist, die grösser ist als die Höhe der äusseren Zylinderwand.

Die vorliegende Erfindung betrifft weiterhin ein Verfahren zur Wärmebehandlung einer Feststoffschüttung in einem Wärmetauscher gemäss der vorliegenden Erfindung, umfassend die Schritte:

a) Einführen der Feststoffschüttung in den Wärmetauscher durch den Produkteinlass des Wärmetauschers, so dass die Feststoffschüttung in den Behandlungsraum des Wärmetauschers gelangt und den Wärmetauscher von oben nach unten bis zu dem mindestens einen Produktauslass durchströmt;
b) Einleiten eines Prozessgases durch den Gaseinlass des Wärmetauschers in den inneren Gasraum des Wärmetauschers, wobei das Gas eine Temperatur aufweist, welche von der Temperatur der Feststoffschüttung verschieden ist;

c) Wärmebehandlung der Feststoffschüttung im Behandlungsraum durch Durchströmen des Behandlungsraums mit Gas aus dem inneren Gasraum, welches im Wesentlichen horizontal aus dem inneren Gasraum durch die innere Zylinderwand und anschliessend durch die äussere Zylinderwand in den äusseren Gasraum strömt;

d) Ableiten des Gases aus dem äusseren Gasraum durch den Gasauslass des Wärmetauschers.

Beim erfindungsgemässen Wärmetauscher wird das zur thermischen Behandlung benötigte Gas in einen inneren Gasraum geleitet, welcher sich innerhalb des Behandlungsraums mit der Feststoffschüttung befindet. Das Gas verteilt sich gleichmässig innerhalb des inneren Gasraums. Da der innere Gasraum nach oben verschlossen ist, kann das Gas nur durch die innere Zylinderwand des Wärmetauschers treten, welche die Begrenzungswand zwischen innerem Gasraum und Behandlungsraum darstellt. Die innere Zylinderwand ist gasdurchlässig, erlaubt aber im Wesentlichen nicht den Durchtritt von Partikeln der Feststoffschüttung.

Unter "im Wesentlichen" wird erfindungsgemäss verstanden, dass höchstens 0,001% aller Partikel der Feststoffschüttung durch die entsprechende Zylinderwand hindurchtreten können.

Das Gas durchströmt die im Behandlungsraum anwesende Feststoffschüttung im Wesentlichen horizontal und gelangt zur äusseren Zylinderwand, welche die Begrenzungswand zwischen Behandlungsraum und einem äusseren Gasraum darstellt. Die äussere Zylinderwand ist gasdurchlässig, erlaubt aber im Wesentlichen nicht den Durchtritt von Partikeln der Feststoffschüttung. Aus dem äusseren Gasraum wird das Gas schliesslich aus dem Wärmetauscher herausgeführt.

Neben der apparativen Vereinfachung gegenüber dem Wärmetauscher der WO 99/18404 A1, dass das Gas nur durch einen Gaseinlass beziehungsweise einen Gasauslass zugeführt beziehungsweise abgeleitet werden muss, kann der erfindungsgemässe Wärmetauscher mit einer grösseren Gasmenge beschickt werden, weil die innere Zylinderwand eine Höhe aufweist, die grösser ist als die Höhe der äusseren Zylinderwand. Obwohl die Dimensionen des Wärmetauschers unverändert bleiben (der Behandlungsraum und die Gasräume befinden sich im Innern des Wärmetauschers), kann auf diese Weise mehr Gas durch den inneren Gasraum in den Behandlungsraum geleitet werden.

Der erfindungsgemässe Wärmetauscher ist hinsichtlich seiner Dimensionen nicht sonderlich begrenzt und kann übliche Dimensionen für einen Wärmetauscher aufweisen, beispielsweise einen Durchmesser von bis zu 3m und eine Höhe von bis zu 10 m.

Der erfindungsgemässe Wärmetauscher wird durch einen Mantel begrenzt. Der Mantel ist vorzugsweise von rechteckigem oder kreisförmigem Querschnitt und aus einem geeigneten Material wie einem Metall, beispielsweise Stahl.

Im Innern des Mantels sind wie nachfolgend beschrieben die zwei Gasräume und der Behandlungsraum bereitgestellt.

Der innere Gasraum dient zur Zuführung von Prozessgas in den Wärmetauscher. Es handelt sich um einen zylinderförmigen Raum, dessen Zylinderachse vorzugsweise mit einer Rotationsachse des Wärmetauschers zusammenfällt. Mit anderen Worten ist der innere Gasraum symmetrisch um eine Rotationsachse des Wärmetauschers angeordnet.

Der innere Gasraum ist mit einem vorzugsweise im unteren Bereich des Wärmetauschers angeordneten Gaseinlass verbunden. Unter "unterer Bereich" wird hierbei die untere Hälfte, vorzugsweise das untere Drittel und besonders bevorzugt das untere Viertel des Wärmetauschers verstanden.

Jeder übliche Gaseinlass kann verwendet werden. Bevorzugt kann der Gaseinlass geöffnet und geschlossen werden, beispielsweise mit Hilfe eines Ventils.

Durch den Gaseinlass gelangt das Prozessgas in den inneren Gasraum. Im Fall einer Ausführungsform mit einem im unteren Bereich des Wärmetauschers angeordneten Gaseinlass steigt das Prozessgas in diesem inneren Gasraum nach oben. Der Gaseinlass kann jedoch auch an anderer Stelle angeordnet sein. Das obere Ende des inneren Gasraums ist verschlossen, weswegen sich das eingeleitete Gas im inneren Gasraum verteilt. Es ist erfindungsgemäss bevorzugt, dass der innere Gasraum einen sich zum oberen Ende des Wärmetauschers hin verjüngenden konischen Endabschnitt aufweist.

Der innere Gasraum ist durch eine innere Zylinderwand begrenzt. Diese ist so ausgestaltet, dass sie gasdurchlässig ist, aber die Partikel der Feststoffschüttung im Wesentlichen nicht durch die Zylinderwand hindurchtreten können. Eine beispielhafte Ausgestaltung der inneren Zylinderwand wird nachstehend beschrieben.

Um den inneren Gasraum herum ist ein hohlzylinderförmiger Behandlungsraum angeordnet. Der Radius des Behandlungsraums ist grösser als der Radius des inneren Gasraums, so dass der Behandlungsraum den inneren Gasraum vollständig umgibt.

Der Behandlungsraum ist nach innen durch die innere Zylinderwand und nach aussen durch eine äussere Zylinderwand begrenzt. Diese ist ebenfalls so ausgestaltet, dass sie gasdurchlässig ist, aber die Partikel der Feststoffschüttung im Wesentlichen nicht durch die Zylinderwand hindurchtreten können. Eine beispielhafte Ausgestaltung der äusseren Zylinderwand wird nachstehend beschrieben.

Der Behandlungsraum dient zur Aufnahme und thermischen Behandlung einer Feststoffschüttung. Hierzu ist der Behandlungsraum mit einem Produkteinlass im oberen Bereich des Wärmetauschers und mindestens einem Produktauslass im unteren Bereich des Wärmetauschers (wie vorstehend definiert) verbunden. Unter "oberer Bereich" wird hierbei die obere Hälfte, vorzugsweise das obere Drittel und besonders bevorzugt das obere Viertel des Wärmetauschers verstanden.

Es können übliche Produkteinlässe und Produktauslässe verwendet werden. Bevorzugt können diese Produkteinlässe und Produktauslässe geöffnet und verschlossen werden, um die Feststoffschüttung kontrolliert zuzuführen und abzuführen. Beispielhaft seien Zellradschleusen genannt.

Gemäss einer Ausführungsform der vorliegenden Erfindung kann der Wärmetauscher mehr als einen Produktauslass aufweisen, beispielsweise zwei Produktauslässe.

Der Behandlungsraum hat die Form eines im Wesentlichen vertikal ausgerichteten Hohlzylinders und ist nach aussen von einem äusseren Gasraum umgeben. Der Radius des Behandlungsraums ist kleinerer als der Radius des äusseren Gasraums, so dass der äussere Gasraum den Behandlungsraum vollständig umgibt.

Der äussere Gasraum dient zum Abführen des Prozessgases, nachdem dieses im Behandlungsraum einen Wärmeaustausch mit der Feststoffschüttung eingegangen ist. Hierzu ist der äussere Gasraum mit einem Gasauslass verbunden, der durch den Mantel führt. Die Position des Gasauslasses ist nicht sonderlich eingeschränkt. Beispielsweise kann der Gasauslass im oberen Bereich des Wärmetauschers (wie vorstehend definiert) angeordnet sein. Es ist aber auch möglich, den Gasauslass in einem anderen Bereich des Wärmetauschers anzuordnen, beispielweise in einem mittleren Bereich oder in einem unteren Bereich. Ist der Gasausass im unteren Bereich des Wärmetauschers angeordnet, kann er gleichzeitig als zusätzlicher Produktauslass zur Entfernung von Partikeln dienen, welche in den äusseren Gasraum gelangt sind.

Jeder übliche Gasauslass kann verwendet werden. Bevorzugt kann der Gasauslass geöffnet und geschlossen werden, beispielsweise mit Hilfe eines Ventils.

Der äussere Gasraum wird nach innen durch die äussere Zylinderwand und nach aussen durch den Mantel des Wärmetauschers begrenzt.

Es ist erfindungsgemäss bevorzugt, dass der äussere Gasraum einen sich zum unteren Ende des Wärmetauschers hin verjüngenden konischen Endabschnitt aufweist. Es ist insbesondere bevorzugt, dass am unteren Ende des konisch verjüngten Endabschnitts eine Auslassöffnung vorgesehen ist.

Wie vorstehend beschrieben sind die innere Zylinderwand und die äussere Zylinderwand gasdurchlässig, aber derart ausgestaltet, dass die Partikel der Feststoffschüttung im Wesentlichen nicht durch die Zylinderwände hindurchtreten können. Derartige Wände sind hinlänglich bekannt. Beispielhaft seien Wände aus einem geeigneten Material wie einem Metall, vorzugsweise Stahl, genannt, welche Öffnungen aufweisen, durch die Gas hindurchtreten kann. Andererseits ist die Grösse der Öffnungen dergestalt, dass Partikel einer Feststoffschüttung im Wesentlichen nicht hindurch gelangen können, da die Partikelgrösse die Grösse der Öffnungen übersteigt.

Gemäss einer bevorzugten Ausführungsform sind die innere Zylinderwand und die äussere Zylinderwand aus einem Spaltblech gebildet, welches aus einer Stützstruktur und darauf angeordneten Profilstäben aufgebaut ist. Vorzugsweise sind die Profilstäbe auf der Seite des Behandlungsraums (d.h. auf der dem Behandlungsraum zugewandten Seite der entsprechenden Zylinderwand) angeordnet und weisen einen derartigen Abstand zueinander auf, dass die Partikel der Feststoffschüttung im Wesentlichen nicht hindurchtreten können.

Die Anordnung der Profilstäbe an der Stützstruktur kann vertikal oder horizontal sein.

Besonders bevorzugt sind die Profilstäbe der äusseren Zylinderwand zum Behandlungsraum hin (d.h. auf der dem Behandlungsraum zugewandten Seite der Zylinderwand) vertikal angeordnet. Dies ermöglicht einen besseren Produktfluss entlang der Profilstäbe. Besonders bevorzugt sind zudem die Profilstäbe der inneren Zylinderwand zum Behandlungsraum hin (d.h. auf der dem Behandlungsraum zugewandten Seite der Zylinderwand) horizontal angeordnet.

Die einzelnen Profilstäbe sind erfindungsgemäss bevorzugt konisch ausgeführt und so auf der Stützstruktur angeordnet, dass der breitere Teil dem Behandlungsraum zugewandt ist und der schmalere Teil der Stützstruktur zugewandt ist. Der Vorteil einer solchen Anordnung liegt darin, dass allfällige Kleinpartikel, die zwischen die Profilstäbe gedrückt werden, durch den herrschenden Produktdruck irgendwann durch die Stäbe gedrückt werden, in den äusseren Gasraum fallen und dort in den konischen Endabschnitt gelangen und über eine Austrittsöffnung entfernt werden können.

Ein erfindungsgemäss wesentliches Merkmal besteht darin, dass die innere Zylinderwand eine Höhe aufweist, die grösser ist als die Höhe der äusseren Zylinderwand. Dadurch kann der erfindungsgemässe Wärmetauscher mit einer grösseren Gasmenge beschickt werden. Obwohl die Dimensionen des Wärmetauschers unverändert bleiben (der Behandlungsraum und die Gasräume befinden sich im Innern des Wärmetauschers), kann auf diese Weise mehr Gas durch den inneren Gasraum in den Behandlungsraum geleitet werden. Als Ergebnis kann eine effizientere Wärmetauschbehandlung durchgeführt werden.

Es ist erfindungsgemäss bevorzugt, dass die Höhe der inneren Zylinderwand 1-50%, vorzugsweise 5-40%, besonders bevorzugt 10-30% grösser ist die Höhe der äusseren Zylinderwand.

Mit dem erfindungsgemässen Wärmetauscher kann eine thermische Behandlung einer Feststoffschüttung durchgeführt werden. Vorzugsweise handelt es sich um eine thermische Behandlung wie Erhitzen, Trocknen oder Kühlen. Während beim Erhitzen oder Trocknen das Prozessgas eine Temperatur aufweist, welche oberhalb der Temperatur der Feststoffschüttung liegt, weist bei einer Kühlung die Feststoffschüttung eine Temperatur auf, welche oberhalb der Temperatur des Prozessgases liegt. Derartige Wärmetauschverfahren sind hinlänglich bekannt.

Es ist auch möglich, den erfindungsgemässen Wärmetauscher zur Kristallisation eines amorphen teilkristallisierbaren Materials wie PET zu verwenden, wie dies in der EP-3 650 186 A1 beschrieben ist.

Die vorliegende Erfindung betrifft weiterhin eine Anlage zur Herstellung eines Polykondensats, vorzugsweise von Polyethylenterephthalat, umfassend einen erfindungsgemässen Wärmetauscher, welcher vorzugsweise als Vorerhitzer vor einem SSP-Reaktor zur Durchführung einer Festphasen-Nachkondensation angeordnet ist.

Erfindungsgemäss bevorzugt wird der erfindungsgemässe Wärmetauscher als Vorerhitzer vor einem SSP-Reaktor zur Durchführung einer Festphasen-Nachkondensation verwendet.

Erfindungsgemäss handelt es sich bei der Feststoffschüttung um eine Schüttung aus einzelnen bevorzugt freifliessenden Partikeln. Die einzelnen Partikel weisen dabei bevorzugt eine im Wesentlichen einheitliche Partikelgrössenverteilung auf. Trotzdem kann das Vorhandensein einzelner Kleinstpartikel nicht ausgeschlossen werden. Dabei werden Partikel, die wenigstens in einer Dimension weniger als die Hälfte des Partikeldurchmessers des durchschnittlichen Partikeldurchmessers aufweisen, als Kleinstpartikel bezeichnet.

Erfindungsgemäss bevorzugt handelt es sich bei der Feststoffschüttung um eine Schüttung aus Partikeln aus Polykondensat, vorzugsweise Polyester wie Polyethylenterephthalat-Homopolymer oder ein Copolymer davon.

Geeignete Polykondensate umfassen kristallisierbare, thermoplastische Polykondensate, wie zum Beispiel Polyamide, Polycarbonate und Polyester inklusive Polyhydroxyalkanoate, Polylaktide oder deren Copolymere, die durch eine Polykondensationsreaktion unter Abspaltung eines niedermolekularen Reaktionsproduktes gewonnen werden. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Teilkristalline Polykondensatgranulate bezeichnen dabei Polykondensatgranulate, die sowohl amorphe Zonen wie auch Zonen mit kristalliner Struktur aufweisen.

Polykondensate eines Polymertyps werden jeweils aus den gleichen Hauptmonomeren gewonnen. Eine begrenzte Menge weiterer Monomere, sogenannter Comonomere, kann dabei zum Einsatz kommen. Polyamide sind Polymere, welche üblicherweise durch Polykondensation aus einer Diamin-Komponente mit der allgemeinen Struktur $H_2N-R^1-NH_2$ und einer Dicarbonsäure-Komponente mit der allgemeinen Struktur $HOOC-R^2-COOH$ gewonnen werden, wobei $R^1$ und $R^2$ üblicherweise gegebenenfalls substituierte, lineare oder verzweigte aliphatische Kohlenwasserstoffe mit 1 bis 15 Kohlenstoffatomen, aromatische oder heteroaromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoff- oder Stickstoffatomen und 3 bis 10 Kohlenstoffatomen sind.

Anstelle der Dicarbonsäure kann auch ihr entsprechendes Dicarbonsäurehalogenid, vorzugsweise Dicarbonsäurechlorid eingesetzt werden.

Beispiele solcher Polyamide sind PA-6,6, das aus Hexamethylendiamin und Adipinsäure hergestellt wird, oder PA-mXD6, das aus m-Xylylendiamin und Adipinsäure hergestellt wird.

Polyamide sind auch Polymere mit sich wiederholenden Amidgruppen mit der allgemeinen Struktur H-[N(H)-R-CO]x-OH, wobei R üblicherweise ein gegebenenfalls substituierter, linearer oder verzweigter aliphatischer Kohlenwasserstoff mit 1 bis 15 Kohlenstoffatomen, ein aromatischer oder heteroaromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Polyamide sind auch Polymere, welche durch Ringöffnungspolymerisation aus heterozyklischen Monomeren mit wenigstens einer Amidgruppe hergestellt werden, wie zum Beispiel Polycaprolactam (PA6) hergestellt aus Caprolactam.

Polyester sind Polymere, welche üblicherweise durch Polykondensation aus einer Diol-Komponente mit der allgemeinen Struktur HO-R1-OH und einer Dicarbonsäure-Komponente mit der allgemeinen Struktur $HOOC-R2-COOH$ gewonnen werden, wobei R1 und R2 üblicherweise gegebenenfalls substituierte, lineare oder verzweigte aliphatische Kohlenwasserstoffe mit 1 bis 15 Kohlenstoffatomen, aromatische oder heteroaromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoffatomen und 3 bis 10 Kohlenstoffatomen sind. Üblicherweise werden lineare oder zyklische Diol-Komponenten und aromatische oder heterozyklische Dicarbonsäure-Komponenten verwendet Anstelle der Dicarbonsäure kann auch ihr entsprechender Diester, üblicherweise Dimethylester eingesetzt werden. Typische Beispiele der Polyester sind Polyethylenterephthalat (PET), Polybutylenterephthalat (PBT), Polytrimethylenterephthalat (PTT), Polyethylenfuranoat (PEF), Polytrimethylenfuranoat (PTF), Polybutylensuccinat (PBS) und Polyethylennaphthalat (PEN), die entweder als Homopolymer oder als Copolymere zum Einsatz kommen.

Ein Beispiel ist Polyethylenterephthalat, das aus seinen Monomeren, einer Diol-Komponente und einer Dicarbonsäure-Komponente, gewonnen wird, wobei die Diol-Komponente als Hauptmonomer aus Ethylenglykol (1,2- Ethandiol) und die Dicarbonsäure-Komponente als Hauptmonomer aus Terephthalsäure besteht. Als Comonomere kommen weitere lineare, cyclische oder aromatische Diol- und Dicarbonsäureverbindungen in Frage. Typische Comonomere sind Diethylenglykol (DEG), Isophthalsäure (IPA) oder 1,4-Bishydroxymethyl-cyclohexan (CHDM).

Ein weiteres Beispiel ist Polyethylenfuranoat, das aus seinen Monomeren, einer Diol-Komponente und einer Dicarbonsäure-Komponente, gewonnen wird, wobei die Diol-Komponente als Hauptmonomer aus Ethylenglykol (1,2- Ethandiol) und die Dicarbonsäure-Komponente als Hauptmonomer aus 2,5-Furandicarbonsäure besteht. Als Comonomere kommen weitere lineare, cyclische oder aromatische Diol- und Dicarbonsäureverbindungen in Frage. Typische Comonomere sind Diethylenglykol (DEG) oder Trimethylenglykol.

Polyester sind auch Polymere mit sich wiederholenden Estergruppen mit der allgemeinen Struktur $H-[O-R-CO]_x-OH$, wobei R üblicherweise ein gegebenenfalls substituierter, linearer oder verzweigter aliphatischer Kohlenwasserstoff mit 1 bis 15 Kohlenstoffatomen, ein aromatischer oder heteroaromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Ein Beispiel sind Polyhydroxyalkanoate mit der allgemeinen Struktur $H-[O-C(R)H-(CH_2)_n-CO]_x-OH$, wobei R üblicherweise ein Wasserstoff oder ein linearer oder verzweigter aliphatischer Kohlenwasserstoff mit 1 bis 15 Kohlenstoffatomen und n gleich 1 bis 10 ist. Beispiele sind Poly-4-hydroxybutyrat und Poly-3-hyd-roxyvalerat.

Ein weiteres Beispiel sind Polylactide mit der allgemeinen Struktur $H-[O-C(R)H-CO]_x-OH$, wobei R üblicherweise eine Methylgruppe oder ein aliphatischer Kohlenwasserstoffe mit 1 bis 15 Kohlenstoffatomen ist.

Ein weiteres Beispiel ist die Polyglycolsäure mit der allgemeinen Struktur $H-[O-CH_2-CO]_x-OH]$.

Polyester sind auch Polymere, welche durch Ringöffnungspolymerisation aus heterozyklischen Monomeren mit einer Estergruppe, wie zum Beispiel Polycaprolacton aus Caprolacton, oder durch Ringöffnungspolymerisation aus heterozyklischen Monomeren mit wenigstens zwei Estergruppen, wie zum Beispiel Polylactid aus Lactid, hergestellt werden.

Das am meisten verbreitete Polylactid ist die Polymilchsäure mit der Struktur $H-[O-C(CH_3)H-CO]_x-OH$. Durch die Chiralität der Milchsäure existieren verschiedene Formen der Polymilchsäure. Homopolymere sind Poly-L-Lactid (PLLA), das üblicherweise aus L,L-Lactid hergestellt wird, und Poly-D-Lactid (PDLA), das üblicherweise aus D,D-Lactid hergestellt wird.

Copolymere wie Poly-(L-Lactid-co-D,L-Lactid) enthalten geringe Mengen an Lactid-Einheiten mit einer Chiralität, die sich vom Hauptmonomer unterscheidet.

Polyester können auch durch Biosynthese durch Mikroorganismen oder in pflanzlichen Zellen hergestellt werden, woraus sie durch Aufschluss der Zelle gewonnen werden.

Bei den geeigneten Polykondensaten kann es sich um kristallisierbare Homopolymere handeln. Trotz der Bezeichnung Homopolymer kann sich im Herstellprozess ein geringer Anteil an Comonomeren bilden. So ist bei der Herstellung von Polyethylenterephthalat die Bildung von Diethylenglykol aus Ethylenglykol bekannt. Viele geeignete Polykondensate sind jedoch kristallisierbare Copolymere, die einen gewissen Anteil an Comonomer enthalten. Die Comonomere können als Teil der Monomere in den Herstellprozess des Polykondensates eingeführt werden oder sie bilden sich als Teil des Herstellprozesses, wodurch sich üblicherweise eine zufällige Verteilung ergibt. Die Comonomere können auch als Blöcken, hergestellt aus unterschiedlichen Monomeren, eingefügt werden, woraus sich sogenannte Blockcopolymere ergeben.

Typische Mengen eines oder mehrerer Comonomere reichen von 1% bis zu ungefähr 30% w/w. Durch die Tatsache, dass in vielen Fällen ein übergrosser Anteil an Comonomer die Kristallisation gänzlich verhindert, kann der maximal Gehalt an Comonomer auf unter 20% w/w, bevorzugt unter 10% w/w beschränkt sein.

Bei den geeigneten Polykondensaten kann es sich um Polymergemische handeln, welche eine beliebige Anzahl und Menge von unterschiedlichen Polymertypen enthalten kann. Eine kleine Menge eines Polymeren kann als Nukleierungsmittel in Polykondensaten wirken und dadurch dessen Kristallisationsrate erhöhen.

Spezifische Polykondensatgemische können untereinander wechselwirkende Kristallstrukturen bilden, mit einem Kristallisationsverhalten, das von den einzelnen Komponenten abweicht.

Ein Beispiel dafür ist ein Gemisch aus PDLA und PLLA, welches eine stereokomplexe Kristallstruktur mit erhöhter Kristallinität bildet.

Nach der Polymerisation hat jede Polykondensatkette kettenbeendende Gruppen mit üblicherweise der Funktionalität von wenigstens einem seiner Monomere. Als Beispiel kann eine Polyesterkette eine oder mehrere Hydroxyl- und/oder Carboxylendgruppen haben. Eine Polyamidkette kann eine oder mehrere Hydroxyl- und/ oder Aminendgruppen haben. Solche Endgruppen können durch ein sogenanntes Endcapping-Reagens modifiziert sein, oder sie können durch eine Abbaureaktion modifiziert sein. Obwohl dies bei den obenstehenden allgemeinen Strukturen nicht spezifisch erwähnt ist, können geeignete Polymere derartige modifizierte Endgruppen haben.

Bei dem Polykondensat kann es sich um ein Neumaterial oder um ein Recyclat handeln. Als Recyclate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polykondensat können Additive zugegeben werden. Als Additive eignen sich zum Beispiel Katalysatoren, Farbstoffe und Pigmente, UV-Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere- oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Die vorstehend beschriebenen Polykondensate können üblicherweise in einer Schmelzpolymerisation bis zu einem gewissen Molekulargewicht hergestellt und anschliessend in einer Granulationsvorrichtung in eine Feststoffschüttung zur weiteren thermischen Behandlung überführt werden.

Der Granulationsvorrichtung zum Formen eines Polykondensatgranulats wird eine Polykondensatschmelze als Ausgangsmaterial zugeführt. Die Herstellung einer Polykondensatschmelze erfolgt mittels im Stand der Technik bekannter Apparaten oder Reaktoren (z.B. Scheirs/Long (Hrsg.), Modern Polyesters, Wiley 2003, insbesondere S- 31-104). Grundsätzlich kommen Polymerisationsreaktoren in Frage, in denen Polykondensate in flüssiger Phase hergestellt werden, wie zum Beispiel Rührkessel, Käfigreaktoren oder Scheibenreaktoren, oder aber Apparaturen, in denen zuvor hergestellte Polykondensate aufgeschmolzen werden, wie zum Beispiel Extruder oder Kneter. Die Polykondensatschmelzeherstellung kann kontinuierlich oder batchweise erfolgen. Für die weitere Verarbeitung sind aber kontinuierliche Prozesse bevorzugt.

In einer Austrittsvorrichtung, insbesondere einer Düse oder Düsenplatte, werden aus der Polykondensatschmelze einzelne Polykondensatstränge geformt. Zur Herstellung von Granulaten (d.h. Teilchen definierter Form und Grösse) aus den Polykondensatsträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polykondensatstränge, die aus den Schmelzekanälen austreten, verfestigt und in eine Vielzahl an einzelnen Granulaten aufgetrennt, wobei das Auftrennen vor oder nach dem Verfestigen erfolgen kann. Das Auftrennen erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polykondensatschmelze erfolgt durch Kühlen mit Hilfe mindestens eines flüssigen Kühlmediums oder einer Kombination verschiedener flüssiger Kühlmedien. Als flüssiges Kühlmedium sind insbesondere Flüssigkeiten geeignet, die eine hohe spezifische Wärmekapazität, bevorzugt grösser als 2 kJ/(kg·K) und einen ausreichend hohen Siedepunkt, bevorzugt grösser als 90°C aufweisen, sowie das Polykondensat nicht wesentlich angreifen oder verändern und keine toxischen Rückstände im Polykondensat hinterlassen. Erfindungsgemäss bevorzugt wird ein einziges flüssiges Kühlmedium verwendet. Bevorzugt sind Wasser oder Ethylenglykol oder deren Gemische. Besonders bevorzugt ist Wasser als Kühlmedium.

Das Polykondensat, insbesondere als Polykondensatstränge oder als Tropfen, kann zum Beispiel vor dem Eintritt in das flüssige Kühlmedium eine Strecke durchfliessen, die ein Prozessgas, insbesondere Luft oder Wassernebel, enthält. Trotz der Verwendung des Begriffs "Wasser" in der Bezeichnung der Granulationseinrichtungen können auch andere flüssige Medien verwendet werden. Das Abkühlen kann erfindungsgemäss vor, während oder nach dem Formen des Materials zu Granulat erfolgen.

Üblicherweise hat das flüssige Kühlmedium bei Eintritt in die Granulationsvorrichtung eine Temperatur, welche mehr als 50°C beträgt, aber mindestens 10°C unterhalb seines Siedepunktes liegt. Im Fall von Wasser beträgt die Temperatur des Kühlmediums gemäss dieser Ausführungsform bei Normaldruck daher 50°C bis 90°C. Durch die Druckabhängigkeit des Siedepunktes erhöht sich die geeignete Temperatur des flüssigen Kühlmediums bei erhöhtem Druck im Flüssigkeitssystem. Bei tieferem Druck reduziert sich die geeignete Temperatur, was unter anderem auch bei offenen Systemen mit tiefem Aussendruck der Fall ist.

Bevorzugt weist das flüssige Kühlmedium, vorzugsweise Wasser, abhängig vom Tg des zu formenden Polykondensats, entsprechend eine Temperatur von weniger als 85°C, besonders bevorzugt von zwischen 50°C und 80°C, insbesondere bevorzugt von zwischen 60°C und 75°C auf.

Gemäss einer erfindungsgemäss bevorzugten Ausführungsform hat das flüssige Kühlmedium bei Eintritt in die Granulationsvorrichtung eine Temperatur, welche unterhalb der Glasübergangstemperatur (auch Glasübergangspunkt genannt, mit Tg abgekürzt) des zu formenden Polykondensats liegt. Bei Polyestern beginnt das Granulat oberhalb der Glasübergangstemperatur des Materials zu verkleben, d.h. die Teilchen haften unter Bildung von Agglomeraten aneinander. Die Glasübergangstemperatur von Polyethylenterephthalat liegt beispielsweise bei etwa 75°C bis 82°C (abhängig vom Comonomergehalt und der Art der zugesetzten Comonomere).

Die Glasübergangstemperatur eines Polykondensats kann mit Hilfe einer DSC (Digital scanning calorimetry)-Messung ermittelt werden. DSC ist ein herkömmliches, dem Fachmann hinlänglich bekanntes Verfahren. Vorrichtungen für DSC-Messungen sind ebenfalls hinlänglich bekannt und käuflich erhältlich. Beispielhaft sei das Gerät Mettler DSC821 genannt. Zur Messung der Glasüberganstemperatur eines Polykondensats wie eines Polyesters können beispielsweise 5-25 mg einer entsprechenden Polymerprobe in einem Mettler DSC821-Messgerät mit einer Rate von 10°C/min von 25°C auf 290°C erhitzt werden. Die Probe wird 1 min bei 290°C gehalten, dann rasch auf Raumtemperatur abgekühlt und ein zweites Mal mit einer Rate von 10°C/min von 25°C auf 290°C erhitzt. Der Glasübergangspunkt (Tg) wird aus diesem zweiten Durchgang ermittelt. Als Tg wird der Wendepunkt des entsprechenden Signals im DSC herangezogen.

Die derart hergestellten Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0 541 674 vorgeschlagen ist, aufweisen. Die mittlere Granulatgrösse soll zwischen 0.1 mm und 10 mm, bevorzugterweise zwischen 0.5 mm und 3.5 mm und besonders bevorzugt zwischen 0.85 mm und 3 mm liegen.

Als mittlere Granulatgrösse gilt der statistische Mittelwert des mittleren Granulatdurchmessers, der sich aus dem Durchschnitt aus Granulathöhe, -länge und -breite (mit bekannten Methoden messbar) ergibt. Die Granulatgrössenverteilung soll in einem engen Spektrum gehalten werden. Bevorzugt ist die Standardabweichung der Granulatgewichte von 100 gemessenen Granulaten zwischen 2 und 20%.

Gemäss einer bevorzugten Ausführungsform der vorliegenden Erfindung wird das Granulat einer Kristallisation unterzogen, bevor es in den erfindungsgemässen Wärmetauscher für eine Vorerhitzung gelangt. Bei dieser Kristallisation kann es sich um eine herkömmliche Kristallisation oder um eine Direktkristallisation handeln.

In einer anderen erfindungsgemässen Variante kann das Granulat (d.h. die Feststoffschüttung) im erfindungsgemässen Wärmetauscher einer Direktkristallisation unterzogen werden, wie dies aus der EP-3 650 186 A1 bekannt ist.

Bei einer herkömmlichen Kristallisation wird das Granulat nach seiner Herstellung auf eine Temperatur unterhalb der Kristallisationstemperatur, insbesondere unterhalb der Glasübergangstemperatur Tg, abgekühlt (z.B. auf Raumtemperatur). Für eine anschliessende Kristallisation muss das Granulat wieder auf eine Temperatur erhitzt werden, die innerhalb des Kristallisationstemperaturbereiches des Polykondensates liegt. Dies kann zum Beispiel über eine beheizte Wand des Kristallisationsreaktors, über beheizte Einbauten im Kristallisationsreaktor, durch Strahlung oder durch das Einblasen eines heissen Prozessgases erfolgen.

Bei einer Direktkristallisation, die sowohl die aktive Direktkristallisation unter Wärmezufuhr als auch die Latentwärmekristallisation umfasst, wird das Granulat nicht derart stark abgekühlt (z.B. auf Raumtemperatur), dass es für eine nachfolgende Kristallisation mit grossem Energieaufwand erhitzt werden muss. Vorzugsweise wird das Granulat auf eine mittlere Granulat-Temperatur abgekühlt, die innerhalb des Kristallisationstemperaturbereiches des Polykondensates liegt. Dies wird erreicht, indem die Temperatur des Kühlmediums wie vorstehend beschrieben gewählt und die Verweilzeit des Granulats im Kühlmedium entsprechend kurz gewählt wird. Bevorzugt erfolgt das Abtrennen des Kühlmediums vom Granulat innerhalb von 0,1 bis 5 Sekunden, besonders bevorzugt innerhalb von 0,3 bis 3 Sekunden nach Zugabe des Kühlmediums. Gleichzeitig mit dem Abkühlen können die Polykondensatgranulate zu einem weiteren Prozessschritt gefördert werden.

Die mittlere Granulat-Temperatur bezeichnet dabei den Mittelwert der Temperaturen der einzelnen Granulate, wobei jedes Granulat eine mittlere Temperatur aufweist, die sich ergibt, wenn sich das Temperaturprofil im Granulat, ohne Wärmeaustauch nach aussen, ausgleicht.

Der geeignete Kristallisationstemperaturbereich wird ersichtlich, wenn die Kristallisationshalbwertszeit (t½) als Funktion der Temperatur aufgezeichnet wird. Er ist nach oben und unten begrenzt durch die Temperatur, bei der die Kristallisationshalbwertszeit das ungefähr 10-Fache der minimalen Kristallisationshalbwertszeit (t½ min) erreicht. Da sehr kurze Kristallisationshalbwertszeiten (t½) nur schwer bestimmbar sind, wird als Minimalwert t½ min = 1 Minute eingesetzt. Zum Beispiel liegt der geeignete Kristallisationstemperaturbereich bei Polyethylenterephthalat zwischen 110 und 220 °C, bei Polyethylenfuranoat zwischen 110 und 190°C und bei Poly-L-lactid zwischen 80 und 140°C.

Die Kristallisationshalbwertszeit (t½) wird mittels isothermer Kristallisation mittels DSC (differential scanning calorimetry) bestimmt. Die Kristallisationshalbwertszeit entspricht der Zeit, die bei der gegebenen Temperatur benötigt wird, um 50% der erreichbaren Kristallinität zu erreichen. Die minimale Kristallisationshalbwertszeit (t½ min) ist die kürzeste Kristallisationshalbwertszeit die im Kristallisationstemperaturbereich erhalten wird.

Bevorzugt, im Fall von Polyethylenterephthalat (PET) als zu behandelndem Polymer, erfolgt eine Abkühlung des Granulats auf eine Temperatur unterhalb der Kristallisationstemperatur, insbesondere unterhalb der Glasübergangstemperatur Tg von etwa 78°C, oder im Fall einer Direktkristallisation auf eine Temperatur im Bereich von 110 bis 180 °C, vorzugsweise auf zwischen 115 °C und 160 °C und besonders bevorzugt von 120 °C bis 150 °C.

Nach dem Abkühlen auf die gewünschte Temperatur wird das Kühlmedium von den Granulaten getrennt und somit getrocknet. Optional erfolgt eine weitere Behandlung (Konditionierung) der Granulate in einem flüssigen Medium, wofür direkt das Kühlmedium oder eine andere Flüssigkeit verwendet werden kann.

Das Trennen der Granulate von einem flüssigen Kühlmedium kann mittels im Stand der Technik bekannter Trennvorrichtungen als Trocknungsvorrichtung erfolgen. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aktive Trennvorrichtungen zumindest für einen Teil der Trennung verwendet, wobei die Trennung zum Beispiel aufgrund einer Gasdurchströmung, einer Zentrifugalkraft, eines Aufpralls, einer Verdampfung oder Kombinationen daraus erfolgen kann. Solche Vorrichtungen sind zum Beispiel als Absaugvorrichtungen, Pralltrockner oder Zentrifugaltrockner bekannt. Das Abtrennen kann durch die Zufuhr eines Gasflusses in die Trennvorrichtung unterstützt werden, wobei der Gasfluss optional erwärmtes oder getrocknetes Gas, insbesondere Luft umfasst. Ein Zentrifugaltrockner mit Luftzufuhr ist bevorzugt.

Für die Abtrennung vom Kühlmedium wird das Granulat aus einer vorstehend beschriebenen Einheit zum Formen des Granulats über eine Verbindungsleitung in eine Einheit zum Abtrennen des Kühlmediums überführt. Die Überführung des Granulats in die Trennvorrichtung erfolgt vorzugsweise mit einer derartigen Geschwindigkeit, dass es nicht zu einer Abkühlung des Granulats unter dessen Kristallisationstemperaturbereich kommt. Die Fliessgeschwindigkeit des Granulats in der Verbindungsleitung kann durch Zufuhr von Luft oder einem anderen geeigneten Gas in die Verbindungsleitung erhöht werden.

Zur beschleunigten Verdampfung von flüssigem Kühlmedium wird bevorzugt eine Temperatur im Bereich von 100 bis 200°C, vorzugsweise von 110 °C bis 160 °C und besonders bevorzugt von 120 bis 150 °C angelegt. Das Granulat verweilt im Trockner vorzugsweise für einen Zeitraum von einer Zehntelsekunde bis zu 10 Sekunden.

Erfindungsgemäss bevorzugt weist das Granulat nach Austritt aus dem Trockner (Trennvorrichtung) eine Temperatur $T_{GR}$ im Bereich von 100-180°C, vorzugsweise von 120 °C bis 160°C auf.

Die Trennvorrichtung weist mindestens eine Eintragsöffnung für die Zufuhr des Granulats in die Einheit auf. Bei der Eintragsöffnung kann es sich zum Beispiel um eine Öffnung im Gehäuse oder um den Austritt aus einem Rohr, das in das Gehäuse geführt wird, handeln. Weiterhin weist die Trennvorrichtung mindestens eine Austragsöffnung für die Wegfuhr des Granulats aus der Einheit auf. Bei der Austragsöffnung kann es sich zum Beispiel um eine Öffnung im Gehäuse oder um den Eintritt in ein Rohr, das aus dem Gehäuse herausgeführt wird, handeln. Weiterhin weist die Trennvorrichtung mindestens eine Austragsöffnung für die Wegfuhr des flüssigen Kühlmediums aus der Einheit auf.

Im Trockner (Trennvorrichtung) liegt eine Gasphase vor, welche das verdampfende Kühlmedium aufnimmt. Bevorzugt handelt es sich bei dem Gas um Luft.

Es können aber auch andere Gase oder Gasgemische mit einem niedrigeren Sauerstoffgehalt als Luft verwendet werden.

Die Trennvorrichtung ist vorzugsweise keine abgeschlossene Einheit. Die Trennvorrichtung weist vorzugsweise mindestens eine Austrittsöffnung zur Abfuhr von Gas, vorzugsweise Luft, auf. Bevorzugt mündet die Austrittsöffnung der Trennvorrichtung in eine Gasabfuhrleitung, in welcher ein Ventilator zur Luftzirkulation durch die Trennvorrichtung angeordnet ist. Optional ist die Austrittsöffnung mit einem Kondensator zur Rückgewinnung von flüssigem Kühlmedium aus dem abgeführten Gas verbunden.

Die Trennvorrichtung kann weiterhin mindestens eine Eintrittsöffnung zur Einleitung von Gas, vorzugsweise Luft, aufweisen. Die Eintrittsöffnung ist in diesem Fall bevorzugt am entgegen gesetzten Ende des Trockners (Trennvorrichtung) zur Austrittsöffnung angeordnet, um ein vollständiges Durchströmen des Trockners (Trennvorrichtung) mit Gas zu gewährleisten. Es ist aber auch möglich, dass die Eintrittsöffnung zur Einleitung von Gas nicht in der Trennvorrichtung angeordnet ist, sondern in einer nachfolgenden Einheit oder einer Verbindungsleitung zu einer nachfolgenden Einheit.

Gemäss einer Ausführungsform wird das Gas über einen Ansaugfilter der Eintrittsöffnung zugeführt. In der zur Eintrittsöffnung führenden Gasleitung kann ein Ventilator zur Luftzirkulation durch die Trennvorrichtung angeordnet sein. Dieser Ventilator kann zusätzlich zum Ventilator in der Gasabfuhrleitung vorgesehen sein oder an dessen Stelle treten.

Die zur Eintrittsöffnung führende Leitung und die von der Austrittsöffnung abgehende Leitung können miteinander untere Ausbildung eines geschlossenen Kreislaufs verbunden sein. Bei dieser Ausführungsform muss das Gas vor Wiedereintritt in die Trennvorrichtung aber durch einen Kondensator geführt werden, um das im Gas befindliche verdampfte Kühlmedium abzutrennen.

Die erfindungsgemässe Anlage weist vorzugsweise einen Kühlmedium-Kreislauf auf. Das Kühlmedium wird aus einem Vorratsbehälter (Tank) vorzugsweise über eine Umwälzpumpe und gegebenenfalls einen Wärmetauscher (zum wahlweisen Erhitzen oder Abkühlen des Kühlmediums) in die Formeinheit (Granulationsvorrichtung) geführt. Das in der Trennvorrichtung oder einem allfälligen Kondensator abgetrennte Kühlmedium kann über eine Rohrleitung zurück in den Vorratsbehälter geführt werden.

Nach dem Abtrennen der Polykondensatgranulate vom flüssigen Kühlmedium erfolgt ein Übertrag in die nachfolgende Einheit, welche einen Kristallisationsraum umfasst. Besonders geeignete Apparate zur Kristallisation sind Fliessbettapparate, wie diese zum Beispiel in der EP-1 425 146 A2 beschrieben sind. Das Erhitzen auf Kristallisationstemperatur und die anschliessende Kristallisation kann in einem oder mehreren Kristallisationsapparaten erfolgen.

Die Kristallisation kann in einem Schritt oder in mehreren Schritten und somit in einem oder in mehreren hintereinander folgenden Vorrichtungen stattfinden. Die Kristallisation kann kontinuierlich oder batchweise erfolgen. Optional kann die Kristallisation in zwei oder mehreren parallel betriebenen Vorrichtungen erfolgen.

Vorzugsweise wird der Übertrag in die nachfolgende Kristallisationseinheit mit Hilfe einer Verbindungsleitung erreicht, welche zwischen Trennvorrichtung und nachfolgender Kristallisationseinheit angeordnet ist und die Austragsöffnung der Trennvorrichtung mit der Eintragsöffnung der nachfolgenden Kristallisationseinheit verbindet. Die Verbindungsleitung ist bevorzugt derart ausgestaltet, dass ein ungehinderter Durchtritt der zu behandelnden Polykondensatgranulate von der vorgeschalteten Einheit zur nachfolgenden Kristallisationseinheit gewährleistet ist.

Optional ist zwischen Trennvorrichtung und nachfolgender Kristallisationseinheit ein Sieb angeordnet, durch das einzelne Granulate mit spezifikationsgemässer Grösse ungehindert durchtreten können, das jedoch Granulatagglomerate und zu grosse Granulate zurück hält. Optional ist zwischen Trennvorrichtung und nachfolgender Einheit eine Absperreinheit, vorzugsweise eine Schleuseneinheit, wie zum Beispiel eine Zellradschleuse angeordnet. Mehrere Trennvorrichtungen können mit einer nachfolgenden Einheit verbunden sein.

Um im Fall einer Störung des Kristallisationsprozesses ein aufwendiges und kostspieliges Entsorgen von Material zu vermeiden, kann die Verbindungsleitung wie in der WO 2008/071278 beschrieben mit einem Zwischenspeicher verbunden sein, in welchen das Material durch eine Steuerungsvorrichtung im Störungsfall geleitet und dort unter Bedingungen (insbesondere Absenkung der Granulat-Temperatur unterhalb seines Glasübergangspunktes) gelagert wird, bei denen eine Agglomeration des Granulats nicht auftritt.

Alternativ ist die Trennvorrichtung derart mit der nachfolgenden Kristallisationseinheit verbunden, dass ein direkter Übertrag der Granulate aus der Trennvorrichtung in die nachfolgende Kristallisationseinheit erfolgen kann.

Beim Eintritt in die nachfolgende Kristallisationseinheit ist das zu behandelnde Granulat in der Regel im Wesentlichen amorph, d.h. es weist einen Kristallisationsgrad von weniger als 10%, vorzugsweise weniger als 5% auf.

Bevorzugt durchfliessen die Polykondensatgranulate die Kristallisationseinheit im Wesentlichen von oben nach unten, während die Kristallisationseinheit im Gegenstrom oder alternativ im Kreuzstrom oder einer Kombination von Gegenstrom und Kreuzstrom von einem Prozessgas durchströmt wird. Wird der erfindungsgemässe Wärmetauscher verwendet, erfolgt ein Durchströmen im Kreuzstrom.

Als Prozessgase können zum Beispiel Luft, Wasserdampf oder Inertgase wie Stickstoff, Edelgase wie Argon, oder $CO_2$ zum Einsatz kommen. Das Prozessgas kann ein Gemisch mehrerer Prozessgase umfassen. Das Prozessgas kann Additive enthalten, die entweder reaktiv auf das zu behandelnde Polykondensat einwirken, eine Quellwirkung auf das Polykondensat haben oder sich passiv auf den zu behandelnden Polykondensatgranulaten ablagern. Der Sauerstoffgehalt des Prozessgases soll weniger als 0,1 Gew.-%, vorzugsweise weniger als 0,05 Gew.-% und besonders bevorzugt weniger als 0,02 Gew.-% betragen.

Für den Fall der alternativen Ausführungsform, bei welcher der erfindungsgemässe Wärmetauscher als Kristallisationseinheit für eine Direktkristallisation verwendet wird, liegen die Polykondensatgranulate darin als Festbett vor, welches das im kontinuierlichen Betrieb bewegte Festbett umfasst.

Bevorzugt ist die Kristallisationseinheit unterhalb der Vorrichtung zum Abtrennen von Kühlmedium/Trocknen angeordnet. Dies trifft sowohl auf eine herkömmliche Kristallisationseinheit als auch auf die alternative Variante zu, bei welcher der erfindungsgemässe Wärmetauscher als Kristallisationseinheit für eine Direktkristallisation verwendet wird.

Das Granulat wird in der Kristallisationseinheit entweder passiv ohne externe Wärmezufuhr (sogenannte Latentwärmekristallisation) kristallisiert oder durch Energiezufuhr von aussen mit Hilfe des heissen Prozessgases kristallisiert (sogenannte aktive Direktkristallisation). Im letzteren Fall wird das Prozessgas mit einer Temperatur $T_{Gas}$ in die Kristallisationseinheit geführt, die grösser ist als die Summe der Granulattemperatur $T_{GR}$ und der durch freigesetzte Kristallisationswärme in der Kristallisationseinheit auftretenden Temperaturerhöhung $T_{KR}$, d.h. $T_{Gas} > (T_{GR} + T_{KR})$. Die Gastemperatur $T_{Gas}$ liegt also über der mittleren Granulattemperatur, welche die Polykondensatgranulate ohne Energiezufuhr von aussen in der Kristallisationseinheit erreichen würden, woraus sich der Vorteil ergibt, dass sich die Polykondensatgranulate auf eine konstante und definierte Austrittstemperatur einstellen lassen. Dies trifft sowohl auf eine herkömmliche Kristallisationseinheit als auch auf die alternative Variante zu, bei welcher der erfindungsgemässe Wärmetauscher als Kristallisationseinheit für eine Direktkristallisation verwendet wird.

Erfindungsgemäss bevorzugt ist in der erfindungsgemässen Anlage der Einheit zur Kristallisation ein erfindungsgemässer Wärmetauscher nachgeschaltet. Bevorzugt wird das Granulat im Wärmetauscher (auch wenn er in der vorstehend beschriebenen Variante als Kristallisationseinheit verwendet wird) auf die für eine weitere thermische Behandlungsstufe, zum Beispiel eine SSP-Reaktion, vorgesehene Temperatur erhitzt. Gemäss einer weiteren erfindungsgemässen Ausführungsform ist dem erfindungsgemässen Wärmetauscher keine weitere thermische Behandlungsstufe mehr nachgeschaltet. Es kann dann ein anderer Nachfolgeprozess oder überhaupt keine weitere Stufe mehr folgen.

In dem erfindungsgemässen Wärmetauscher wird das erfindungsgemässe Verfahren durchgeführt. Erfindungsgemäss sollte das Masse-Verhältnis von Gasstrom zu Produktstrom im erfindungsgemässem Wärmetauscher grösser 1 und kleiner als 10 sein, vorzugsweise grösser 2 und kleiner als 10 und insbesondere bevorzugt grösser 3 und kleiner als 7.

Die durch den Produkteinlass des Wärmetauschers in den Behandlungsraum eingeführte Feststoffschüttung wird wie vorstehend beschrieben im Kreuzstrom von Gas aus dem inneren Gasraum durchströmt, welches anschliessend in den äusseren Prozessraum gelangt und abgeleitet wird. Das Gas weist eine Temperatur auf, welche von der Temperatur der Feststoffschüttung verschieden ist. Im Fall eines Vorerhitzers ist das Prozessgas heisser als die Feststoffschüttung, aber zumindest um 10°C kälter als der Schmelzpunkt der Partikel in der Feststoffschüttung.

Erfindungsgemäss bevorzugt durchströmt das Gas die innere Zylinderwand des inneren Gasraums mit einer Lehrohrgeschwindigkeit im Bereich von 0.3 bis 0.8m/s, insbesondere mit 0.4 bis 0.7 m/s. Dementsprechend durchströmt das Gas die äussere Zylinderwand mit einer Lehrrohrgeschwindigkeit von 0.2 bis 0.6m/s, insbesondere mit mehr als 0.3m/s. Durch den erfindungsgemässen Unterschied der Zylinderhöhe lässt sich der Unterschied der Gasgeschwindigkeit durch die innere und äussere Zylinderwand reduzieren. Es hat sich gezeigt, dass in diesem Bereich die stabilsten Prozessbedingungen und der effizienteste Wärmeaustausch erhalten werden können.

Da erhitzte Prozessgase teuer sind, wird erfindungsgemäss bevorzugt das eingesetzte Prozessgas zumindest teilweise in einem Kreislaufsystem geführt, wobei jeweils eine geringe Menge an Austauschgas zu- und weggeführt werden kann. Zwischen der Wegführeinrichtung und Zuführeinrichtung für das Prozessgas besteht gemäss dieser bevorzugten Ausführungsform ein im Wesentlichen geschlossener Kreislauf aus Rohrleitungen.

Im Kreislauf können sich weitere Einheiten, wie zum Beispiel Verdichtungseinrichtungen (z. B. Ventilatoren, Gebläse oder Kompressoren), Wärmetauscher (z.B. Erhitzer), Absperrvorrichtungen z.B. ein Ventil oder Hahn) oder Reinigungseinrichtungen (z. B. Filter, Zyklone, Wäscher oder katalytische Verbrennungseinrichtungen), befinden.

Gemäss einer bevorzugten Ausführungsform der vorliegenden Erfindung ist der erfindungsgemässe Wärmetauscher, vorzugsweise durch eine Zuführleitung, mit einem Inertgastank verbunden. Durch die Zuführleitung kann Inertgas aus dem Inertgastank in das Kreislaufsystem aus Rohrleitungen oder direkt in den erfindungsgemässen Wärmetauscher eingeführt werden. Vorzugsweise ist in dieser Zuführleitung eine Dosiereinheit, beispielsweise ein Regelventil, angeordnet, mit welcher die Zufuhr von Inertgas kontrolliert werden kann.

Als Inertgas kann Gas aus einem Prozess zur weiteren thermischen Behandlung (z.B. einem SSP-Prozess) verwendet werden, wobei dieses direkt oder gereinigt zum Einsatz kommen kann.

Gemäss einer bevorzugten Ausführung der vorliegenden Erfindung erfolgt im als Vorerhitzer fungierenden erfindungsgemässen Wärmetauscher ein Annealing der Polykondensatgranulate, wodurch ein allfälliger low melting-Peak auf eine Temperatur verschoben wird, die zumindest 10° über der Behandlungstemperatur in der nachfolgend beschriebenen Vorrichtung zur Durchführung einer weiteren thermischen Behandlungsstufe liegt.

Der low melting-Peak kann mittels DSC (Digital scanning calorimetry)-Messung ermittelt werden. Zur Messung des low melting-Peak eines Polykondensats wie eines Polyesters können beispielsweise 5-25 mg einer entsprechenden Polymerprobe in einem Mettler DSC821-Messgerät mit einer Rate von 10°C/min von Raumtemperatur auf eine Temperatur über dem Schmelzpunkt des Polykondensates erhitzt werden. Als low melting-Peak wird die Spitze des endothermen Schmelzpeaks bezeichnet, der dem eigentlichen Schmelzpeak vorgelagert ist, wobei es zu einer Vermischung des low melting-Peaks und des Schmelzpeaks kommen kann, wenn sich der low melting-Peak auf der Flanke des Schmelzpeaks befindet. In diesem Fall kann der low melting Peak aus der ersten Ableitung der DSC-Kurve ermittelt werden, wobei das Zwischenminimum auf der Flanke als low melting-Peak gilt.

Im Fall von Polyethylenterephthalat (PET) weist das Granulat beim Austritt aus dem erfindungsgemässen Wärmetauscher vorzugsweise einen Kristallisationsgrad zwischen 20% und 50%, insbesondere zwischen 31% und 45% auf, und der low melting-Peak liegt im Bereich von 190 - 250°C, insbesondere im Bereich von 200 - 240°C.

Erfindungsgemäss bevorzugt weist das Granulat im Fall von Polyethylenterephthalat (PET) vor Eintritt in den als Vorerhitzer fungierenden erfindungsgemässen Wärmetauscher einen IV-Wert von 0.4 bis 0.8 dl/g, insbesondere 0.55 bis 0.75 dl/g auf. Der IV-Wert gibt die intrinsische Viskosität eines Polymers an und ist ein Mass für dessen Molekulargewicht. Der IV-Wert und seine Bestimmung sind aus dem Stand der Technik bekannt. Die intrinsische Viskosität (IV) wird erfindungsgemäss nach folgender Vorschrift bestimmt: Zur Messung der Lösungsviskosität wird eine Mischung aus Phenol/-Dichlorbenzol (50 : 50 Gew.%) als Lösungsmittel benutzt. Die Polyesterprobe wird während 10 Minuten bei 130°C mit einer Konzentration von 0.5% (0.5g/dl) aufgelöst. Die Messung der relativen Viskosität (R.V.) wird bei 25°C mit einem Ubbelohde-Viskosimeter (nach DIN Anweisung Nr. 53728, Teil 3 vom Januar 1985) durchgeführt. Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1+4KH(R.V.-1)}-1}{2*c*KH} \qquad (dl/g)$$

Mit den obigen Messmethoden (Polymerkonzentration C=0,5.g/dl und der Huggins Konstante $K_H$=0.35) wird die Gleichung:

$$I.V. = \frac{\sqrt{1+1.4(R.V.-1)}-1}{0.35} \qquad (dl/g)$$

Die Viskosität des Polyesters kann entweder als intrinsische Viskosität (IV) oder als mittleres Molekulargewicht (Zahlenmittel: Mn) angegeben sein. Zur Umrechnung eines IV-Wertes gemessen in Phenol:Dichlormethan = 1:1 in das mittlere Molekulargewicht wird die Gleichung

$$IV = k \cdot Mn^a$$

verwendet, wobei k=2.1·10⁻⁴ und a=0.82 ist.

Diese Gleichung ist allgemein auf publizierte Daten anwendbar, wenn nicht explizit ein anderes Lösemittelgemisch und die dazu gehörenden Umrechnungsfaktoren gegeben sind.

In der erfindungsgemässen Anlage können die vorstehend erhaltenen Polykondensatgranulate einer weiteren thermischen Behandlung zugeführt werden, welche vorzugsweise aus der Gruppe bestehend aus einer Devolatilisierungsstufe, vorzugsweise Dealdehydisierungsstufe oder Trocknungsstufe, und einer Festphasen-Nachkondensation (SSP) ausgewählt ist. Diese thermische Behandlung wird in einer weiteren Vorrichtung, vorzugsweise in einem separaten Reaktor durchgeführt. Auf eine derartige nachfolgende thermische Behandlung erfolgt optional eine Kühlung oder eine direkte Weiterverarbeitung.

Sowohl die Devolatilisierung, vorzugsweise Dealdehydisierung oder Trocknung, als auch die SSP-Reaktion sind dem Fachmann bekannt und müssen an dieser Stelle nicht näher erläutert werden. Erfindungsgemäss bevorzugt wird diese thermische Behandlung in einer Gasphase aus Inertgas durchgeführt, wobei flüchtige Komponenten aus der Feststoffschüttung während der Behandlung verdampfen und in die Gasphase übergehen. Vorzugsweise wird Stickstoff als Inertgas verwendet. Erfindungsgemäss soll der Sauerstoffgehalt des Gases in der weiteren Vorrichtung weniger als 0,1 Gew.-%, vorzugsweise weniger als 0,05 Gew.-% und besonders bevorzugt weniger als 0,02 Gew.-% betragen, um eine oxidative Beschädigung der Polykondensatgranulate zu verringern beziehungsweise auszuschliessen.

Aufgrund der hohen Temperatur des in die weitere Vorrichtung eintretenden Polymers ist es nicht erforderlich, sehr heisses Prozessgas in die weitere Vorrichtung einzuleiten. Aufgrund frei werdender Kristallisationswärme wird erfindungsgemäss in der weiteren Vorrichtung im Fall von Polyethylenterephthalat (PET) in der Regel ein Temperaturanstieg von 2 bis 15 °C, vorzugsweise von 3 bis 15°C und besonders bevorzugt von 5 bis 15°C beobachtet. Gemäss der vorliegenden Erfindung kann daher in bestimmten Fällen in der weiteren Vorrichtung ein Prozessgas eingeleitet werden, dessen Temperatur unterhalb der Temperatur der in der weiteren Vorrichtung vorliegenden Polykondensatgranulate liegt.

Durch die vorliegende Erfindung kann eine nachfolgende thermische Behandlung daher energieeffizient durchgeführt werden.

In der weiteren Vorrichtung wird das Prozessgas vorzugsweise im Gegenstrom zum Strom der Partikel der Feststoffschüttung geführt. Es können beliebige Reaktoren, die im Stand der Technik zur thermischen Behandlung von Schüttgütern bekannt sind, eingesetzt werden. Beispielsweise sei ein herkömmlicher Schachtreaktor erwähnt.

Die kristallisierten Polykondensatgranulate werden auf bekannte Art aus dem als Vorerhitzer fungierenden erfindungsgemässen Wärmetauscher in der weiteren Vorrichtung überführt. Beispielsweise können die Granulate mittels einer pneumatischen Förderung in die weitere Vorrichtung überführt werden. Hierbei kann je nach Geschwindigkeit der Förderung eine Abkühlung der Polykondensatgranulate um zwischen 2 und 15°C, vorzugsweise zwischen 3 und 15°C und besonders bevorzugt zwischen 5 und 15°C erfolgen. Falls erforderlich kann ein zusätzliches Erhitzen der Granulate vor Eintritt in die weitere Vorrichtung auf bekannte Art durchgeführt werden.

Erfindungsgemäss kann die Dealdehydisierung von beispielsweise Polyethylenterephthalat bei einer Temperatur von 140 bis 200°C erfolgen. Es ist hierbei beispielsweise ein Temperaturanstieg in der weiteren Vorrichtung von 3 bis 15°C zu beobachten.

Erfindungsgemäss kann die SSP-Reaktion von beispielsweise Polyethylenterephthalat bei einer Temperatur von 180 bis 240°C, vorzugsweise 180 bis 225°C erfolgen. Es ist hierbei beispielsweise ein Temperaturanstieg in der weiteren Vorrichtung von 3 bis 15°C zu beobachten.

Die vorliegende Erfindung wird nachstehend anhand einer nicht einschränkenden Zeichnung näher erläutert. Es zeigen:

Fig. 1     eine schematische Darstellung eines Schnittes durch eine bevorzugten Ausführungsform eines Wärmetauschers gemäss der vorliegenden Erfindung.

Fig. 2     eine schematische Seitenansicht der Ausführungsform des Wärmetauschers gemäss Fig. 1.

Fig. 3     eine schematische Darstellung einer bevorzugten Ausführungsform einer Anlage gemäss der vorliegenden Erfindung.

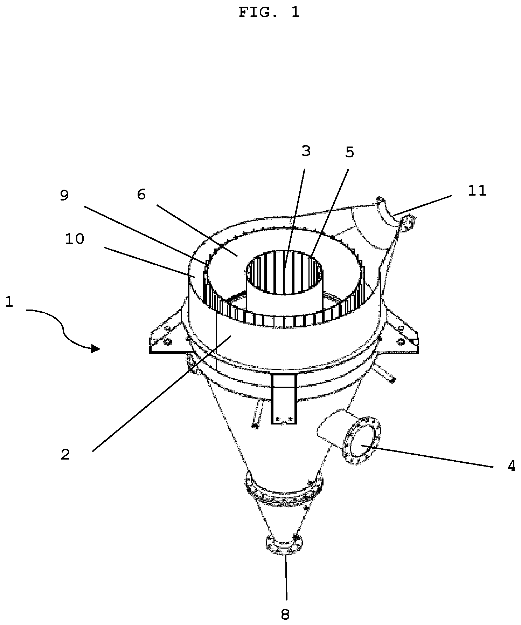

In Fig. 1 ist eine schematische Darstellung einer bevorzugten Ausführungsform eines Wärmetauschers gemäss der vorliegenden Erfindung gezeigt. Der Wärmetauscher 1 umfasst einen Mantel 2, einen innerhalb des Mantels 2 angeordneten Behandlungsraum 6, welcher mit einem Produkteinlass 7 (nicht gezeigt in Fig. 1) im oberen Bereich des Wärmetauschers 1 und mindestens einem Produktauslass 8 im unteren Bereich des Wärmetauschers 1 verbunden ist und die Form eines im Wesentlichen vertikal ausgerichteten Hohlzylinders aufweist, wobei der Hohlzylinder durch eine innere Zylinderwand 5 und durch eine äussere Zylinderwand 9 begrenzt wird.

Der Wärmetauscher 1 weist weiterhin einen mit einem im unteren Bereich des Wärmetauschers 1 angeordneten Gaseinlass 4 verbundenen inneren zylinderförmigen Gasraum 3 innerhalb der inneren Zylinderwand 5 des Behandlungsraums 6 auf.

Der Wärmetauscher 1 weist weiterhin einen Gasauslass 11 auf, welcher mit einem äusseren hohlzylinderförmigen Gasraum 10 verbunden ist, der seinerseits zwischen der äusseren Zylinderwand 9 des Behandlungsraums 6 und dem Mantel 2 des Wärmetauschers 1 angeordnet ist.

Die innere Zylinderwand 5 und die äussere Zylinderwand 9 sind gasdurchlässig, aber die Partikel der Feststoffschüttung können im Wesentlichen nicht durch die Zylinderwände 5, 9 hindurchtreten.

Der Wärmetauscher 1 gemäss Fig. 1 ist aus schematischen Gründen oben offen dargestellt. Der erfindungsgemässe Wärmetauscher 1 ist jedoch nach oben verschlossen und weist dort lediglich einen Produkteinlass 7 auf.

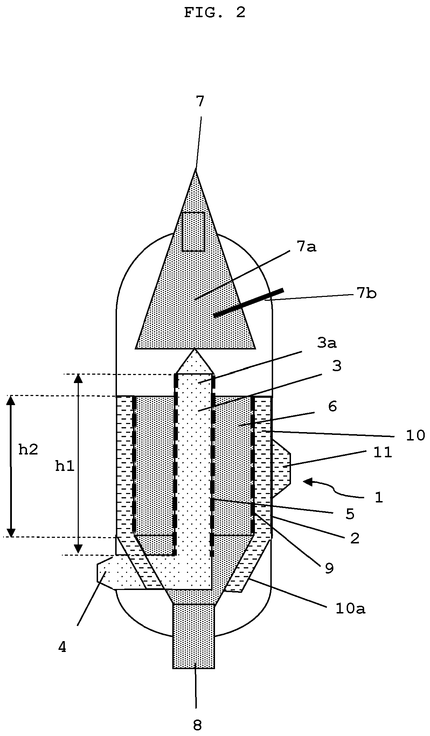

In Fig. 2 ist eine schematische Seitenansicht der Ausführungsform des Wärmetauschers gemäss Fig. 1 gezeigt. Gleiche Bezugszeichen beschreiben gleiche Komponenten.

In Fig. 2 ist der obere Produkteinlass 7 ersichtlich. Weiterhin sind die konischen Endabschnitte 3a, 10a des inneren Gasraums 3 und des äusseren Gasraums 10 ersichtlich.

Weiterhin ist in Fig. 2 ersichtlich, dass die innere Zylinderwand 5 eine Höhe h1 aufweist, die grösser ist als die Höhe h2 der äusseren Zylinderwand 9.

Weiterhin ist in Fig. 2 ersichtlich, dass sich zwischen dem oberen Produkteinlass 7 und dem Behandlungsraum 6 eine Verteilbereich 7a befinden kann, aus dem die Feststoffschüttung möglichst gleichmässig dem Behandlungsraum 6 zugeführt wird. Um diese Verteilung zu gewährleisten ist es bevorzugt sicherzustellen, dass immer ein ausreichend hoher Füllstand im Verteilbereich 7a gewährleistet ist. Dies kann zum Beispiel durch den Einsatz einer Niveausonde 7b im Verteilraum 7a gewährleistet werden.

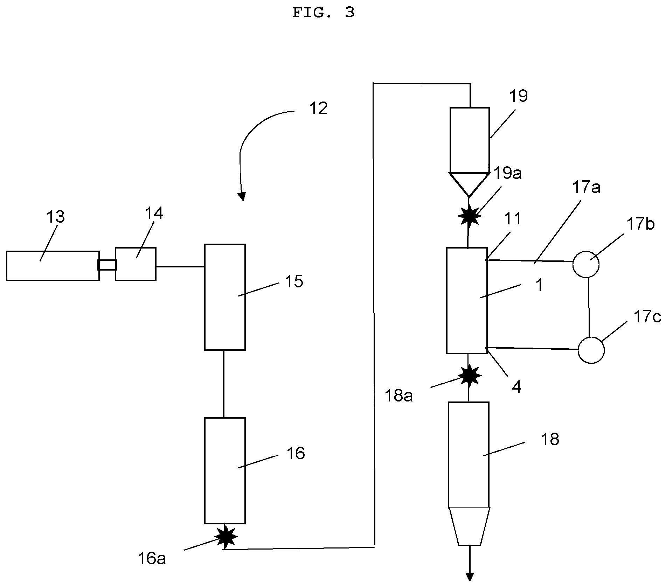

In Fig. 3 ist eine schematische Darstellung einer bevorzugten Ausführungsform einer Anlage 12 gemäss der vorliegenden Erfindung gezeigt.

Die Anlage 12 gemäss Fig. 3 weist einen Reaktor 13 zur Herstellung einer Polymerschmelze auf. Es kann sich hierbei um einen Reaktor handeln, in welchem eine Schmelzpolymerisation durchgeführt und somit ein Prepolymer aus den Monomeren hergestellt wird. Wahlweise kann es sich bei dem Reaktor 13 auch um eine Vorrichtung zum Aufschmelzen eines festen Produkts, beispielsweise eines Prepolymer handeln. Beispielhaft kann der Reaktor 13 in diesem Fall ein Extruder sein.

Das geschmolzene Material wird in eine Granulationsvorrichtung 14 überführt. In der Granulationsvorrichtung 14 wird auf bekannte Weise ein Granulat aus dem geschmolzenen Material hergestellt. Beispielsweise kann es sich um einen Unterwassergranulator handeln. Die Granulierung erfolgt in diesem Fall unter Wasser. Die erhaltenen Granulate werden im Granulator 14 gleichzeitig abgekühlt. Wie vorstehend ausgeführt darf die Abkühlung aber nicht so stark ausfallen, dass die Granulate unterhalb ihres Kristallisationstemperaturbereiches abgekühlt werden. Dies kann durch den Einsatz von erwärmtem Wasser, welches eine Temperatur über 50°C, aber zumindest 10°C unterhalb seines druckabhängigen Siedepunktes, insbesondere eine Temperatur unterhalb des Tg des Polykondensates, vorzugsweise eine Temperatur von 50 bis 80°C aufweist, erreicht werden. Das Granulat sollte im Fall von Polyethylenterephthalat (PET) auf eine Temperatur von 110 bis 180°C, vorzugsweise 115 to 160°C und besonders bevorzugt 120 bis 150°C, gekühlt werden.

Das Granulat wird über eine Verbindungsleitung in eine Einheit zum Trocknen des Granulats (Trennvorrichtung) 15 überführt. Zur Vermeidung einer zu starken Abkühlung des Granulats sollte dieses so schnell wie möglich aus dem Granulator 14 und durch die Verbindungsleitung geführt werden. Vorzugsweise kann die Fliessgeschwindigkeit in der Verbindungsleitung durch Einleitung eines Gasstroms (vorzugsweise Luft) erhöht werden.

In der Einheit zum Trocknen des Granulats (Trennvorrichtung) 15 wird das Granulat vom flüssigen Kühlmedium (Wasser) abgetrennt und getrocknet. Das abgetrennte Kühlmedium wird vorzugsweise durch eine (nicht gezeigte) Rohrleitung zurück in einen Vorratsbehälter für das Kühlmedium geführt, welcher mit der Granulationsvorrichtung 14 verbunden ist und aus welchem das Kühlmedium in die Granulationsvorrichtung 14 überführt werden kann.

Die Trocknung des Granulats in der Einheit zum Trocknen des Granulats (Trennvorrichtung) 15 erfolgt vorzugsweise neben einer mechanischen Trennvorrichtung mit Hilfe von Gas, vorzugsweise Luft oder einer im wesentlichen Luft umfassenden Gasatmosphäre, bei einer Temperatur von 100 bis 200°C, vorzugsweise 110 bis 160°C.

Das Granulat wird aus der Trennvorrichtung 15 über eine Verbindungsleitung (in welcher vorzugsweise eine nicht gezeigte Zellradschleuse angeordnet ist) in eine Kristallisationseinheit 16 überführt. Das Granulat kann ungehindert von der Trennvorrichtung 15 in die Einheit 16 übergehen. In einer optionalen Ausführungsform ist die Einheit 16 ein erfindungsgemässer Wärmetauscher 1, wobei dann auf einen nachfolgenden Wärmetauscher 1 üblicherweise verzichtet werden kann.

In der Einheit 16 wird das im Wesentlichen amorphe Granulat zumindest teilkristallisiert. Innerhalb der Einheit 16 werden die Granulate entweder ohne Gasstrom oder durch einen im Gegenstrom oder Kreuzstrom durch die Einheit 16 geleiteten Gasstrom wärmebehandelt. Bei der Einheit 16 kann es sich zum Beispiel um einen starren Behälter oder um eine bewegte Rinne (Vibrorinne) handeln.

Die Kristallisation der Partikel erfolgt vorzugsweise ohne Energiezufuhr von aussen. Das kristallisierte Granulat verlässt die Einheit 16 über eine Austragsvorrichtung, beispielsweise einer Absperreinheit wie einer Zellradschleuse 6a.

Alternativ kann stromabwärts von der Zellradschleuse eine zweite Schleuseneinheit (wie eine Zellradschleuse) angeordnet sein.

Das Granulat wird aus der Kristallisationseinheit 16 über eine Verbindungsleitung üblicherweise durch pneumatische Förderung in einen Vorerhitzer überführt, bei welchem es sich um einen erfindungsgemässen Wärmetauscher 1 handelt. Wie in der bevorzugten Ausführungsform in Fig. 3 gezeigt kann zwischen der Kristallisationseinheit 16 und dem erfindungsgemässen Wärmetauscher 1 ein Puffer 19 angeordnet sein, aus welchem das Material mittels einer Zellradschluse 19a kontrolliert in den erfindungsgemässen Wärmetauscher 1 überführt werden kann.

Stromabwärts von dem Wärmetauscher 1 kann eine Schleuseneinheit wie eine Zellradschleuse 18a angeordnet sein.

Bevorzugt wird entweder durch Regelung der Schleuseneinheit 18a oder 19a aufgrund eines Messsignals der Niveausonde 7b (hier nicht gezeigt) ein ausreichender Füllstand im Wärmetauscher 1 gewährleistet.

Das Granulat kann aus dem Wärmetauscher 1 über eine Verbindungsleitung üblicherweise durch pneumatische Förderung einer weiteren thermischen Behandlung wie einer Dealdehydisierung, Trocknung oder SSP-Reaktion in einem Reaktor 18 zugeführt werden. Wahlweise können die Partikel auch direkt einer Kühlstufe zugeführt werden. Alternativ kann stromabwärts von dem Reaktor 18 eine Schleuseneinheit wie eine Zellradschleuse (nicht gezeigt) angeordnet sein.

Das im Wärmetauscher 1 verwendete Prozessgas wird vorzugsweise durch ein geschlossenes Kreislaufsystem aus Rohrleitungen 17a geführt. Das Prozessgas tritt hierbei in den Wärmetauscher 1 durch die Eintrittsöffnung 4 ein und verlässt den Wärmetauscher 1 durch die Austrittsöffnung 11. Im Kreislaufsystem des Prozessgases befindet sich ein Ventilator 17b zur Zirkulation des Gases. Vor der Eintrittsöffnung 4 ist ein weiterer Wärmetauscher 17c bereitgestellt, um das Gas vor dem Eintritt in den Wärmetauscher 1 auf die gewünschte Temperatur zu bringen. Vorzugsweise wird das Gas im Wärmetauscher 17c erhitzt.

## Patentansprüche

1. Wärmetauscher (1) für eine Feststoffschüttung, umfassend

   - einen Mantel (2),
   - einen innerhalb des Mantels (2) angeordneten Behandlungsraum (6), welcher mit einem Produkteinlass (7) im oberen Bereich des Wärmetauschers (1) und mindestens einem Produktauslass (8) im unteren Bereich des Wärmetauschers (1) verbunden ist und die Form eines im Wesentlichen vertikal ausgerichteten Hohlzylinders aufweist, wobei der Hohlzylinder durch eine innere Zylinderwand (5) und durch eine äussere Zylinderwand (9) begrenzt wird,
   - einen mit einem Gaseinlass (4) verbundenen inneren zylinderförmigen Gasraum (3) innerhalb der inneren Zylinderwand (5) des Behandlungsraums (6),
   - einen mit einem Gasauslass (11) verbundenen äusseren hohlzylinderförmigen Gasraum (10) zwischen der äusseren Zylinderwand (9) des Behandlungsraums (6) und dem Mantel (2) des Wärmetauschers (1),
   wobei die innere Zylinderwand (5) und die äussere Zylinderwand (9) gasdurchlässig sind, aber die Partikel der Feststoffschüttung im Wesentlichen nicht durch die Zylinderwände (5, 9) hindurch treten können,
   **dadurch gekennzeichnet, dass** die innere Zylinderwand (5) eine Höhe (h1) aufweist, die grösser ist als die Höhe (h2) der äusseren Zylinderwand (9).

2. Wärmetauscher nach Anspruch 1, **dadurch gekennzeichnet, dass** die Höhe (h1) der inneren Zylinderwand (5) 1-50%, vorzugsweise 5-40%, besonders bevorzugt 10-30% grösser ist die Höhe (h2) der äusseren Zylinderwand (9).

3. Wärmetauscher nach Anspruch 1 oder 2, **dadurch gekennzeichnet, dass** die innere Zylinderwand (5) und die äussere Zylinderwand (9) aus einem Spaltblech gebildet sind, welches aus einer Stützstruktur und darauf angeordneten Profilstäben aufgebaut ist.

4. Wärmetauscher nach Anspruch 3, **dadurch gekennzeichnet, dass** die Profilstäbe auf der Seite des Behandlungsraums (6) angeordnet sind und einen derartigen Abstand zueinander aufweisen, dass die Partikel der Feststoffschüttung im Wesentlichen nicht hindurchtreten können.

5. Wärmetauscher nach Anspruch 3 oder 4, **dadurch**

**gekennzeichnet, dass** die Profilstäbe der äussere Zylinderwand (9) zum Behandlungsraum (6) hin vertikal angeordnet sind.

6. Wärmetauscher nach einem der Ansprüche 1 bis 5, **dadurch gekennzeichnet, dass** der äussere Gasraum (10) einen sich zum unteren Ende des Wärmetauschers (1) hin verjüngenden konischen Endabschnitt (10a) aufweist.

7. Wärmetauscher nach einem der Ansprüche 1 bis 6, **dadurch gekennzeichnet, dass** der innere Gasraum (3) einen sich zum oberen Ende des Wärmetauschers hin verjüngenden konischen Endabschnitt (3a) aufweist.

8. Verfahren zur Wärmebehandlung einer Feststoffschüttung in einem Wärmetauscher (1) gemäss einem der Ansprüche 1 bis 7, umfassend die Schritte:

   a) Einführen der Feststoffschüttung in den Wärmetauscher (1) durch den Produkteinlass (7) des Wärmetauschers (1), so dass die Feststoffschüttung in den Behandlungsraum (6) des Wärmetauschers (1) gelangt und den Wärmetauscher (1) von oben nach unten bis zu dem mindestens einen Produktauslass (8) durchströmt;
   b) Einleiten eines Prozessgases durch den Gaseinlass (4) des Wärmetauschers (1) in den inneren Gasraum (3) des Wärmetauschers (1), wobei das Gas eine Temperatur aufweist, welche von der Temperatur der Feststoffschüttung verschieden ist;
   c) Wärmebehandlung der Feststoffschüttung im Behandlungsraum (6) durch Durchströmen des Behandlungsraums (6) mit Gas aus dem inneren Gasraum (3), welches im Wesentlichen horizontal aus dem inneren Gasraum (3) durch die innere Zylinderwand (5) und anschliessend durch die äussere Zylinderwand (9) in den äusseren Gasraum (10) strömt;
   d) Ableiten des Gases aus dem äusseren Gasraum (10) durch den Gasauslass (11) des Wärmetauschers.

9. Verfahren nach Anspruch 8, **dadurch gekennzeichnet, dass** das Gas die innere Zylinderwand (5) mit einer Lehrrohrgeschwindigkeit im Bereich von 0.3 bis 0.8m/s durchströmt.

10. Verfahren nach Anspruch 8 oder 9, **dadurch gekennzeichnet, dass** das Gas in einem Kreislauf (17a) vom Gasauslass (11) zum Gaseinlass (4) geführt wird.

11. Verfahren nach Anspruch 10, **dadurch gekennzeichnet, dass** das Gas zwischen dem Gasauslass (11) und dem Gaseinlass (10) gereinigt und einer Temperaturbehandlung unterzogen wird.

12. Verfahren nach einem der Ansprüche 8 bis 11, **dadurch gekennzeichnet, dass** es sich bei der Feststoffschüttung um eine Schüttung aus Partikeln aus Polyethylenterephthalat-Homopolymer oder ein Copolymer davon handelt.

13. Verfahren nach einem der Ansprüche 8 bis 12, **dadurch gekennzeichnet, dass** in Schritt c) die Temperatur der Feststoffschüttung erhöht wird.

14. Verfahren nach Anspruch 13, **dadurch gekennzeichnet, dass** in Schritt c) die Feststoffschüttung für einen weiteren thermischen Behandlungsschritt, vorzugsweise für eine Festphasen-Nachkondensation, erhitzt wird.

15. Anlage zur Herstellung eines Polykondensats, vorzugsweise von Polyethylenterephthalat, umfassend einen Wärmetauscher (1) gemäss einem der Ansprüche 1 bis 7, welcher vorzugsweise als Vorerhitzer vor einem SSP-Reaktor (18) zur Durchführung einer Festphasen-Nachkondensation angeordnet ist.

**Claims**

1. Heat exchanger (1) for a solid bulk material, comprising

   - a jacket (2),
   - a treatment chamber (6) arranged within the jacket (2), which is connected to a product inlet (7) in the upper region of the heat exchanger (1) and at least one product outlet (8) in the lower region of the heat exchanger (1) and has the shape of a substantially vertically aligned hollow cylinder, wherein the hollow cylinder is delimited by an inner cylinder wall (5) and by an outer cylinder wall (9),
   - an inner cylindrical gas chamber (3) within the inner cylinder wall (5) of the treatment chamber (6), which is connected to a gas inlet (4),
   - an outer hollow cylindrical gas chamber (10) between the outer cylinder wall (9) of the treatment chamber (6) and the jacket (2) of the heat exchanger (1), which is connected to a gas outlet (11),
   wherein the inner cylinder wall (5) and the outer cylinder wall (9) are gas-permeable, but the particles of the solid bulk material substantially cannot pass through the cylinder walls (5, 9), **characterized in that** the inner cylinder wall (5) has a height (h1) which is greater than the height (h2) of the outer cylinder wall (9).

**2.** Heat exchanger according to claim 1, **characterized in that** the height (h1) of the inner cylinder wall (5) is 1-50%, preferably 5-40%, particularly preferably 10-30% greater than the height (h2) of the outer cylinder wall (9).

**3.** Heat exchanger according to claim 1 or 2, **characterized in that** the inner cylinder wall (5) and the outer cylinder wall (9) are formed from a split plate which is formed from a support structure and profiled bars arranged thereon.

**4.** Heat exchanger according to claim 3, **characterized in that** the profiled bars are arranged on the side of the treatment chamber (6) and are spaced apart from one another in such a way that the particles of the solid bulk material essentially cannot pass through.

**5.** Heat exchanger according to claim 3 or 4, **characterized in that** the profiled bars of the outer cylinder wall (9) are arranged vertically towards the treatment chamber (6).

**6.** Heat exchanger according to any one of claims 1 to 5, **characterized in that** the outer gas chamber (10) has a conical end section (10a) which is tapered towards the lower end of the heat exchanger (1).

**7.** Heat exchanger according to any one of claims 1 to 6, **characterized in that** the inner gas chamber (3) has a conical end section (3a) which is tapered towards the upper end of the heat exchanger.

**8.** A method for heat treating a solid bulk material in a heat exchanger (1) according to any one of claims 1 to 7, comprising the steps of:

a) Introducing the solid bulk material into the heat exchanger (1) through the product inlet (7) of the heat exchanger (1), so that the solid bulk material enters the treatment chamber (6) of the heat exchanger (1) and flows through the heat exchanger (1) from top to bottom to the at least one product outlet (8);
b) Introducing a process gas through the gas inlet (4) of the heat exchanger (1) into the inner gas chamber (3) of the heat exchanger (1), the gas having a temperature which is different from the temperature of the solid bulk material;
c) Heat treatment of the solid bulk material in the treatment chamber (6) by flowing gas from the inner gas chamber (3) through the treatment chamber (6), wherein the gas flows essentially horizontally from the inner gas chamber (3) through the inner cylinder wall (5) and subsequently through the outer cylinder wall (9) into the outer gas chamber (10);
d) Discharging the gas from the outer gas chamber (10) through the gas outlet (11) of the heat exchanger.

**9.** The method according to claim 8, **characterized in that** the gas flows through the inner cylinder wall (5) at a superficial velocity in the range from 0.3 to 0.8 m/s.

**10.** The method according to claim 8 or 9, **characterized in that** the gas is led in a circuit (17a) from the gas outlet (11) to the gas inlet (4).

**11.** The method according to claim 10, **characterized in that** the gas is purified between the gas outlet (11) and the gas inlet (10) and subjected to a temperature treatment.

**12.** The method according to any one of claims 8 to 11, **characterized in that** the solid bulk material is a bulk of particles of polyethylene terephthalate homopolymer or a copolymer thereof.

**13.** Process according to any one of claims 8 to 12, **characterized in that** in step c) the temperature of the solid bulk material is increased.

**14.** Process according to claim 13, **characterized in that** in step c) the solid bulk material is heated for a further thermal treatment step, preferably for a solid-phase post-condensation.

**15.** Plant for producing a polycondensate, preferably polyethylene terephthalate, comprising a heat exchanger (1) according to any one of claims 1 to 7, which is preferably arranged as a preheater upstream of an SSP reactor (18) for carrying out a solid-phase post-condensation.

**Revendications**

**1.** Échangeur de chaleur (1) pour un matériau solide en vrac, comprenant

- une enveloppe (2)
- une chambre de traitement (6) disposée à l'intérieur de l'enveloppe (2), qui est reliée à une entrée de produit (7) dans la partie supérieure de l'échangeur de chaleur (1) et à au moins une sortie de produit (8) dans la partie inférieure de l'échangeur de chaleur (1) et qui a la forme d'un cylindre creux sensiblement aligné verticalement, le cylindre creux étant délimité par une paroi cylindrique intérieure (5) et par une paroi cylindrique extérieure (9),
- une chambre à gaz cylindrique intérieure (3) située à l'intérieur de la paroi cylindrique intérieure (5) de la chambre de traitement (6), qui est reliée à une entrée de gaz (4),
- une chambre à gaz cylindrique creuse extérieure (10) située entre la paroi cylindrique extérieure (9) de la chambre de traitement (6) et l'enveloppe (2) de l'échangeur de chaleur (1), qui est reliée à une sortie de gaz (11),
dans lequel la paroi intérieure du cylindre (5) et la paroi extérieure du cylindre (9) sont perméables aux gaz, mais les particules du matériau solide en vrac ne peuvent pratiquement pas passer à travers les parois du cylindre (5, 9), **caractérisée en ce que** la paroi cylindrique intérieure (5) a une hauteur (h1) supérieure à la hauteur (h2) de la paroi cylindrique extérieure (9).

2. Échangeur de chaleur selon la revendication 1, **caractérisé en ce que** la hauteur (h1) de la paroi intérieure du cylindre (5) est supérieure de 1 à 50 %, de préférence de 5 à 40 %, de préférence encore de 10 à 30 % à la hauteur (h2) de la paroi extérieure du cylindre (9).

3. Échangeur de chaleur selon la revendication 1 ou 2, **caractérisé en ce que** la paroi du cylindre intérieur (5) et la paroi du cylindre extérieur (9) sont formées d'une plaque fendue qui est formée d'une structure de support et de barres profilées disposées sur celle-ci.

4. Échangeur de chaleur selon la revendication 3, **caractérisé en ce que** les barres profilées sont disposées sur le côté de la chambre de traitement (6) et sont espacées les unes des autres de manière à ce que les particules du matériau solide en vrac ne puissent pas essentiellement passer à travers.

5. Échangeur de chaleur selon la revendication 3 ou 4, **caractérisé en ce que** les barres profilées de la paroi extérieure du cylindre (9) sont disposées verticalement vers la chambre de traitement (6).

6. Échangeur de chaleur selon l'une des revendications 1 à 5, **caractérisé en ce que** la chambre à gaz extérieure (10) a une section d'extrémité conique (10a) qui est effilée vers l'extrémité inférieure de l'échangeur de chaleur (1).

7. Échangeur de chaleur selon l'une des revendications 1 à 6, **caractérisé en ce que** la chambre à gaz intérieure (3) a une section d'extrémité conique (3a) qui est effilée vers l'extrémité supérieure de l'échangeur de chaleur.

8. Procédé de traitement thermique d'un matériau solide en vrac dans un échangeur de chaleur (1) selon l'une quelconque des revendications 1 à 7, comprenant les étapes suivantes :

a) Introduire la matière solide en vrac dans l'échangeur de chaleur (1) par l'entrée de produit (7) de l'échangeur de chaleur (1), de sorte que la matière solide en vrac entre dans la chambre de traitement (6) de l'échangeur de chaleur (1) et traverse l'échangeur de chaleur (1) de haut en bas jusqu'à l'au moins une sortie de produit (8) ;
b) Introduire un gaz de traitement par l'entrée de gaz (4) de l'échangeur de chaleur (1) dans la chambre à gaz intérieure (3) de l'échangeur de chaleur (1), le gaz ayant une température différente de celle du matériau solide en vrac ;
c) Traitement thermique du matériau solide en vrac dans la chambre de traitement (6) par écoulement de gaz depuis la chambre à gaz intérieure (3) à travers la chambre de traitement (6), le gaz s'écoulant essentiellement horizontalement depuis la chambre à gaz intérieure (3) à travers la paroi du cylindre intérieur (5), puis à travers la paroi du cylindre extérieur (9) dans la chambre à gaz extérieure (10) ;
d) Évacuation du gaz de la chambre à gaz extérieure (10) par la sortie de gaz (11) de l'échangeur de chaleur.

9. Procédé selon la revendication 8, **caractérisé par le fait que** le gaz s'écoule à travers la paroi intérieure du cylindre (5) à une vitesse superficielle comprise entre 0,3 et 0,8 m/s.

10. Procédé selon la revendication 8 ou 9, **caractérisé par le fait que** le gaz est conduit dans un circuit (17a) de la sortie de gaz (11) à l'entrée de gaz (4).

11. Procédé selon la revendication 10, **caractérisé en ce que** le gaz est purifié entre la sortie de gaz (11) et l'entrée de gaz (10) et soumis à un traitement thermique.

12. Procédé selon l'une des revendications 8 à 11, **caractérisé en ce que** le matériau solide en vrac est un vrac de particules de polyéthylène téréphtalate homopolymère ou de l'un de ses copolymères.

13. Procédé selon l'une des revendications 8 à 12, **caractérisé en ce que**, à l'étape c), la température du matériau solide en vrac est augmentée.

14. Procédé selon la revendication 13, **caractérisé en ce que**, à l'étape c), le matériau solide en vrac est chauffé pour une étape de traitement thermique supplémentaire, de préférence pour une postcondensation en phase solide.

15. Installation de production d'un polycondensat, de préférence du polyéthylène téréphtalate, comprenant un échangeur de chaleur (1) selon l'une quelconque des revendications 1 à 7, qui est de préférence disposé comme préchauffeur en amont d'un réacteur SSP (18) pour la réalisation d'une post-condensation en phase solide.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6405454 B
- DE 4300913 A1
- WO 9918404 A1
- EP 3650186 A1
- EP 0541674 A
- EP 1425146 A2
- WO 2008071278 A

**In der Beschreibung aufgeführte Nicht-Patentliteratur**

- Modern Polyesters. Wiley, 2003, 31-104